(19) Europäisches Patentamt

European Patent Office

Office européen des brevets

(11) Veröffentlichungsnummer: **0 348 763 B1**

## (12) EUROPÄISCHE PATENTSCHRIFT

(45) Veröffentlichungstag der Patentschrift: **23.12.92**

(21) Anmeldenummer: **89111034.8**

(22) Anmeldetag: **18.06.89**

(51) Int. Cl.⁵: **B23Q 7/10,** B65G 59/02

(54) **Vorrichtung zum Austragen stangenförmiger Werkstücke aus einem Werkstückmagazin.**

(30) Priorität: **30.06.88 DE 3822084**

(43) Veröffentlichungstag der Anmeldung:
**03.01.90 Patentblatt 90/01**

(45) Bekanntmachung des Hinweises auf die
Patenterteilung:
**23.12.92 Patentblatt 92/52**

(84) Benannte Vertragsstaaten:
**AT CH DE FR GB IT LI NL**

(56) Entgegenhaltungen:
**DD-A- 114 791**
**DD-A- 201 576**
**DE-A- 2 524 629**

(73) Patentinhaber: **WEERTH-HANDLING-SYSTEME**
**Hans E. Weerth**
**Mehlisstrasse 9**
**W-7985 Baindt-Schachen(DE)**

(72) Erfinder: **Weerth, Hans-Ernst**
**Mehlisstrasse 9**
**W-7985 Baindt-Schachen(DE)**

(74) Vertreter: **Zipse + Habersack**
**Kemnatenstrasse 49**
**W-8000 München 19(DE)**

## Beschreibung

Die Erfindung betrifft eine Vorrichtung zum Austragen stangenförmiger Werkstücke aus einem Werkstückmagazin gemäß dem Oberbegriff des Anspruchs 1. Um aufeinanderliegende stangenförmige Werkstücke, insbesondere zylindrische Werkstücke, automatisch beispielsweise einer weiterverarbeitenden Maschine zuzuführen, müssen sie in den meisten Fällen vereinzelt werden.

Es ist aus der DE-B- 34 20 014 bekannt, daß zylindrische Werkstücke, die beispielsweise in Gurten liegen, die angehoben werden, an der oben liegenden Gurt-Umlenkrolle hinausrollen und zur weiterverarbeitenden Maschine ausgetragen werden können. Ebenso bestehen Einrichtungen, bei denen die Werkstücke in Behältern liegen, bei denen der Behälterboden angehoben wird. Beim Anheben des Bodens können die oben liegenden Teile über den Behälterrand hinausrollen.

Das Hinausrollen geschieht allerdings unkontrolliert. Je nach Lage der aufeinanderliegenden Teile rollen einmal mehr oder weniger viele Werkstücke hinaus. Bei weiterem Anheben der Gurte bzw. des Bodens bildet sich zudem oberhalb der Abrollkante ein sich mehr oder weniger auftürmender Werkstückberg, da die Werkstücke sich aufeinander abstützen. Dabei kann es passieren, daß die Werkstücke bei einer bestimmten Lage aus großer Höhe hinabstürzen, was zu Beschädigung der Teile und zu großer Lärmbelästigung führt.

Werkstücke, die keine zylindrische Form haben, beispielsweise mit ovalem oder sechseckigem Querschnitt, können auf diese Weise überhaupt nicht ausgetragen werden, da sie nicht oder nur schlecht abrollen.

Dem DE-U 78 35 336 ist als bekannt zu entnehmen, Holzleisten oder Holzbretter mechanisch mittels eines Fördersystems mit in den Bereich der jeweils oben liegenden Werkstücke eingreifenden Mitnehmern einem anhebbaren Stapel zu entnehmen und unter Vereinzelung einer Bearbeitungsmaschine zuzuführen. Desgleichen beschreibt die DE-PS 34 07 296 die Vereinzelung von in Stapeln liegenden Dachziegeln mittels eines ein jeweils oben liegendes Dachzielgelpaar vom Stapel auf eine Fahrbahn abschiebenden Abschiebers.

Beim Ausfördern von Werkstücken von einem Stapel mittels in den Bereich der jeweils oben liegenden Werkstücke eingreifenden Mitnehmern kann es leicht zu Verklemmungen und damit Betriebsstörungen kommen, insbesondere wenn die Werkstücke unregelmäßig liegen oder sie aufgrund ihrer Form beim Ausfördern zu Eigenbewegungen neigen.

Der Erfindung liegt die Aufgabe zugrunde, ansgehend von einer Vorrichtung nach dem DE-6/7 78 35 336 das Austragen der Werkstücke, auch solcher mit nicht zylindrischem Querschnitt, kontrolliert zu bewerkstelligen.

Diese Aufgabe wird bei einer gattungsgemäßen Vorrichtung durch die kennzeichnenden Merkmale des Anspruchs 1 gelöst.

Die mit der Erfindung erzielten Vorteile liegen insbesondere darin, daß ein sicher funktionierendes Ausfördern der Werkstücke erreicht wird, indem die erfindungsgemäß vorgesehenen Fördermittel nachgebend befestigt sind, so daß sie gegenüber beim Fördervorgang evtl. auftretenden Verklemmungen der Werkstücke ausweichen können. Ein sicheres Funktionieren ist besonders dann erforderlich, wenn eine Maschine beschickt werden soll, bei der bestimmte Bearbeitungs-Taktzeiten vorliegen.

Desweiteren wird eine lärmarme, werkstückschonende Förderung erzielt. Außerdem können Werkstücke mit nicht zylindrischem Querschnitt, beispielsweise mit ovalem, sechseckigem oder ähnlichem Querschnitt gefördert werden.

Weitere Ausgestaltungen der Erfindung sehen vor, daß

- die Zufuhrbewegung der Werkstücke durch einen optoelektrischen Schalter gesteuert wird oder über einen Schalter, der von den nachgebend angeordneten Fördermitteln betätigt wird, wenn die Werkstücke Druck auf diese ausüben,

- die Förderbewegung beiden Fördermitteln von den zugeführten Werkstücken bewirkt wird.

Mehrere Ausführungsbeispiele der Erfindung sind anhand von Zeichnungen dargestellt und werden im Folgenden näher beschrieben. Es zeigen

Fig. 1  die Schemazeichnung (Ansicht) eines aus DE-PS 34 20 014 bekannten Werkstückmagazins mit Austrageinrichtung für rohr- und stangenförmige Werkstücke,

Fig. 2  die Schemazeichnung des oberen Teils eines Werkstückmagazins mit Fördermitteln nach einer Ausführungsform der Erfindung,

Fig. 3  die Schemazeichnung des oberen Teils eines Werkstückmagazins mit einem durch einen Zylinder angetriebenen Fördermitteln,

Fig. 4  die Schemazeichnung des oberen Teils eines Werkstückmagazins mit federnd aufgehängten Fördermitteln,

Fig. 5  die Schemazeichnung des oberen Teils eines Werkstückmagazins mit schwenkbaren Fördermitteln,

Fig. 6  die Schemazeichnung des oberen Teils eines Werkstückmagazins mit gelenkig aufgehängtem Förderrechen ohne eigenen Antrieb.

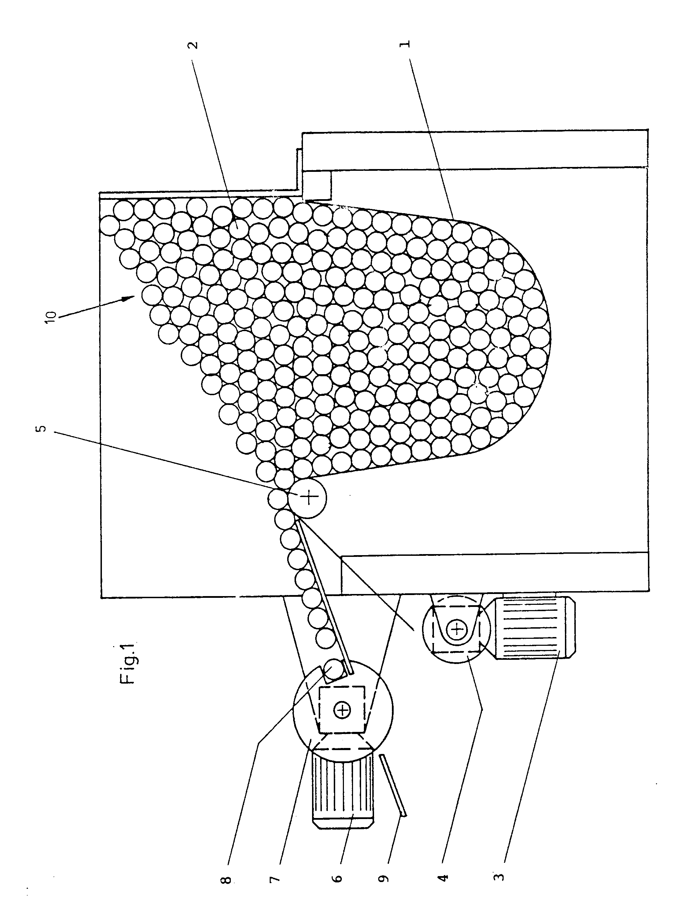

In Fig. 1 sind in Gurten 1 (vorzugsweise 2 Gurten) eines Magazins liegende zylindrische Werkstücke 2 dargestellt. Die Gurte werden auf vom Motor 3 angetriebene Gurttrommeln 4 gewikkelt. Dabei rollen die Werkstücke 2 über eine Umlenkrolle 5 gegen das vom Motor 6 angetriebene Vereinzelungsrad 7 und in dessen Aussparung 8. Beim Drehen des Vereinzelungsrades werden die einzelnen Rohre auf eine Rutsche 9 gefördert. Da die Werkstücke 2 sich beim Anheben der Gurte aufeinander abstützen, bildet sich nach und nach ein Werkstückberg 10, von dem die Werkstücke je nach ihrer zueinander befindlichen Lage einzeln oder zu mehreren hinunterstürzen. Bei diesem aus DE-PS 34 20 014 bekannten Werkstückmagazin fehlen die erfindungsgemäß vorgesehenen zweiten nachgiebig gelagerten Fördermittel.

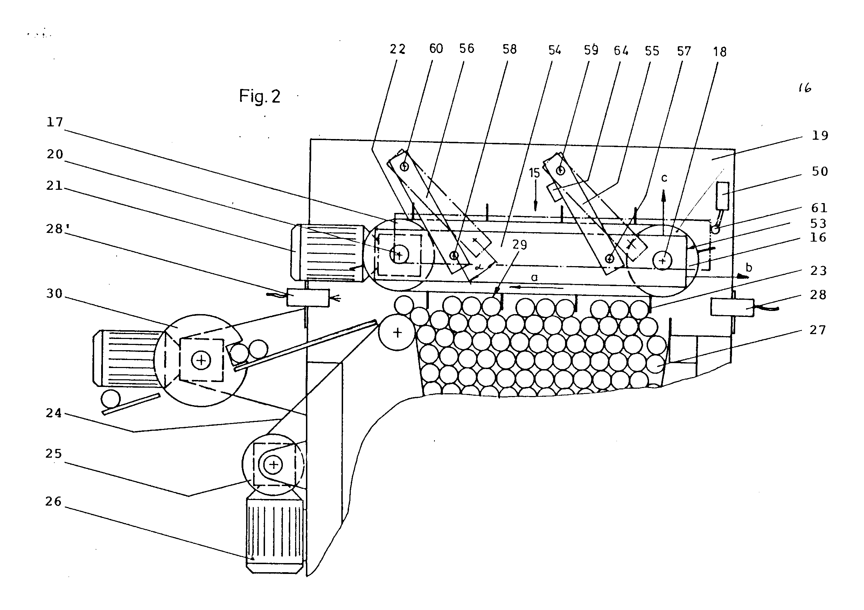

In Fig. 2 ist das Werkstückmagazin mit einem Ketten- oder Zahnriemen-Fördersystem 15 dargestellt. Die Ketten- (Zahnriemen-) räder 16,17 sind auf einer Achse 18, die in zwei Traversen 54 befestigt ist, drehbar gelagert und auf einer Welle 20, die ebenfalls in den Traversen 54 gelagert ist und von einem Motor 21 angetrieben wird, verdrehsicher befestigt. Die Ketten- (Zahnriemen-) räder 16,17, die vom Motor 21 angetrieben werden, bewegen die Kette (oder den Zahnriemen) 22, woran Mitnehmer (Schieber) 23 befestigt sind. Die vom Motor 26 angetriebenen Gurttrommeln 25 wickeln die Gurte 24 auf. Beim Aufwickeln werden die Werkstücke 27 nach oben gehoben. Der opto-elektrische Schalter 28,28' steuert die Aufwärtsbewegung der Gurte, d.h. wenn die obere Werkstücklage 29 die Höhe des Schalters 28,28' erreicht hat, stoppt der Motor 26. In den Mitnehmern 23 sind Schlitze vorgesehen, so daß der Lichtstrahl des Schalters 28,28' ungehindert Durchgang findet. Bei sich drehenden Ketten- (Zahnriemen-) rädern 16,17 werden die oben liegenden Werkstücke 29, je nach Werkstückdurchmesser zwei oder mehrere Lagen, in Pfeilrichtung a nach vorn gefördert. Die Werkstücke 27 rollen gegen das Vereinzelungsrad 30 und werden von dort weitergefördert, wie bei Fig. 1 beschrieben ist.

Für eine schonende Behandlung der Werkstücke beim Ausfördern sind die beschriebenen Fördermittel 15 so befestigt, daß sie ausweichen können. Hiermit wird erreicht, daß die Mitnehmer 23, so bald sich die Werkstücke 27 gegeneinander verklemmen und es dabei beim Ausfördern zu Reibungen zwischen den Werkstücken 27 kommt, nachgeben können.

Zu diesem Zweck sind die Fördermittel 15 über Gelenkstangen 55,56 in Gelenkpunkten 57,58 an den Traversen 54 gelenkig befestigt. Die Gelenkstangen 55,56 sind an ihrem oberen Ende wiederum gelenkig in Gelenkpunkten 59,60 am Gestell 19 befestigt. Werden die Werkstücke 27 nach oben bewegt, stoßen sie gegen die Fördermittel 15, die über die Gelenkstangen 55,56 ausweichen können und Bewegungen in Pfeilrichtung b und c ausführen, wobei die Gelenkstangen 55,56 ihre Lage um die Größe des Winkels α verändern. Durch das Nachgeben der Fördermittel 15 in Pfeilrichtung b und c bei gleichzeitiger Förderbewegung der Mitnehmer 23 in Richtung a wird eine stärkere Reibung der Werkstücke 27 untereinander beim Ausfördern vermieden. In unterster Stellung liegt die Gelenkstange 55 auf einem Anschlag 64 auf, der mit dem Gestell 19 fest verbunden ist, so daß die Fördermittel 15 nicht weiter absinken können. Statt des opto-elektrischen Schalters 28,28' kann über einen Schalter 50, der am Gestell 19 befestigt ist, das Signal zum Stoppen der Aufwärtsbewegung der Gurte 24 gegeben werden. Sobald beim Hochschwingen der Fördermittel 15 die hintere Fläche 53 einer der Traversen 54 die Schaltrolle 61 des Schalters 50 drückt, gibt der Schalter 50 ein entsprechendes Signal an die Steuerung des Werkstückmagazins.

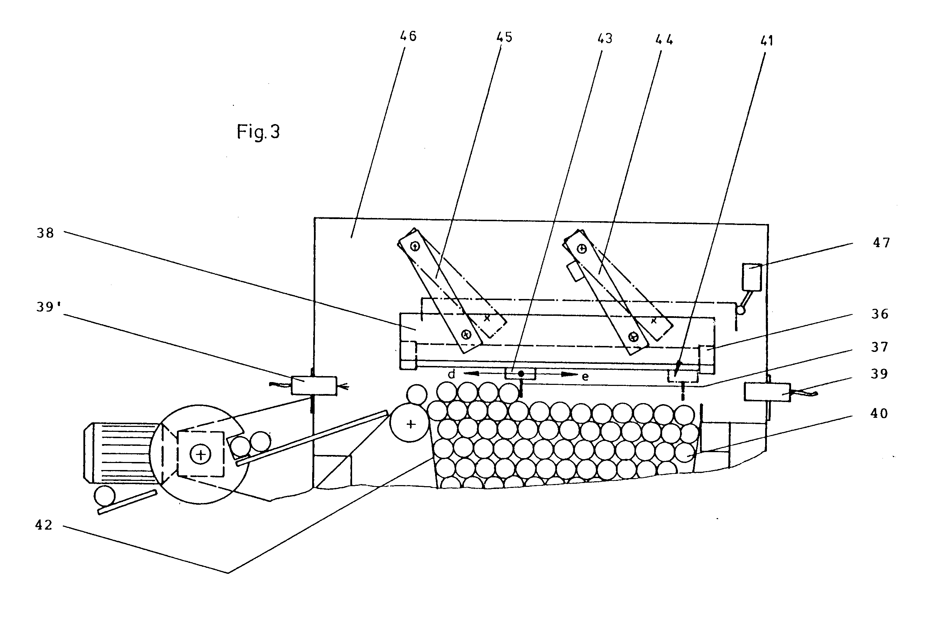

In Fig. 3 ist statt des Ketten- (Zahnriemen-) antriebs, wie in Fig. 2 beschrieben, ein Hubgerät 36, das beispielsweise pneumatisch, elektrisch oder hydraulisch betrieben wird, vorgesehen, an dessen bewegtes Teil 43, beispielsweise ein Kolben bei einem kolbenstangenlosen Pneumatikzylinder, ein Mitnehmer 37 befestigt ist. Das Hubgerät 36 ist fest mit den Traversen 38 verbunden, die in gleicher Weise über die Gelenkstangen 44,45 mit dem Gestell 46 verbunden sind, wie bei Fig. 2 beschrieben ist. Die Werkstücke 40 werden vom Mitnehmer 37 gefördert, wobei auch hier das Hochfahren der Werkstücke vom opto-elektrischen Schalter 39,39' oder Schalter 47 überwacht wird. Der Mitnehmer 37 bewegt sich in Pfeilrichtung d vor oder e zurück. Die Werkstücke 40 werden von den Gurten 42 nur nach oben gefördert, wenn der Mitnehmer 37 zurückgefahren in Stellung 41 steht, was der Steuerung des mobilen Magazins über einen Endschalter (nicht dargestellt) gemeldet wird.

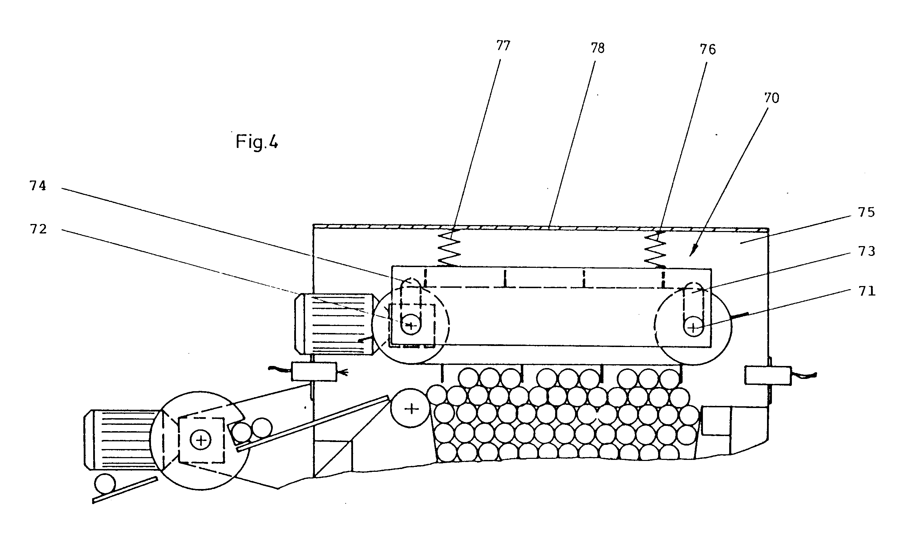

Fig. 4 zeigt eine andere Anordnung der Fördermittel 70, ebenfalls nachgebend befestigt. Sie werden mit ihrer Achse 71 bzw. Welle 72 als komplette Einheit, beispielsweise in den Langlöchern 73,74 des Gestells 75 in der Weise geführt, daß sie nach oben hin gegen die Federn 76,77 ausweichen können. Die Federn 76,77 stützen sich an der Platte 78 des Gestells 75 ab und drücken auf die Fördermittel 70, so daß diese nach oben hin federnd nachgeben können.

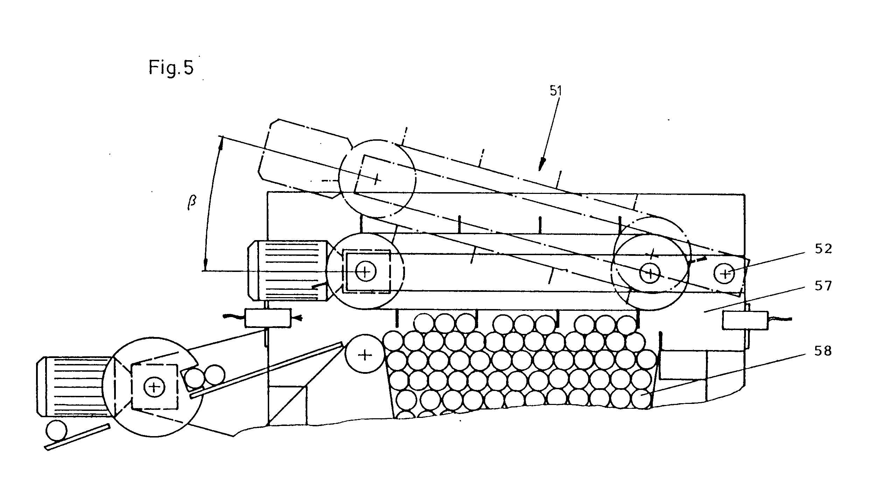

Fig. 5 zeigt eine Ausführung, bei der das Ausweichen der Fördermittel 51 auf eine weitere Art ermöglicht wird. Hierbei sind die Fördermittel 51 in einem Bolzen 52, der seitlich des Werkstückmagazins am Gestell 57 befestigt ist, gelenkig gelagert, so daß sie um diesen Punkt schwenken können.

Somit können die Fördermittel 51 bei auftretenden Zwängen, die beim Ausfördern der Werkstücke 58 auftreten, nachgeben, indem sie um den sich entsprechend ergebenden Winkel β schwenken.

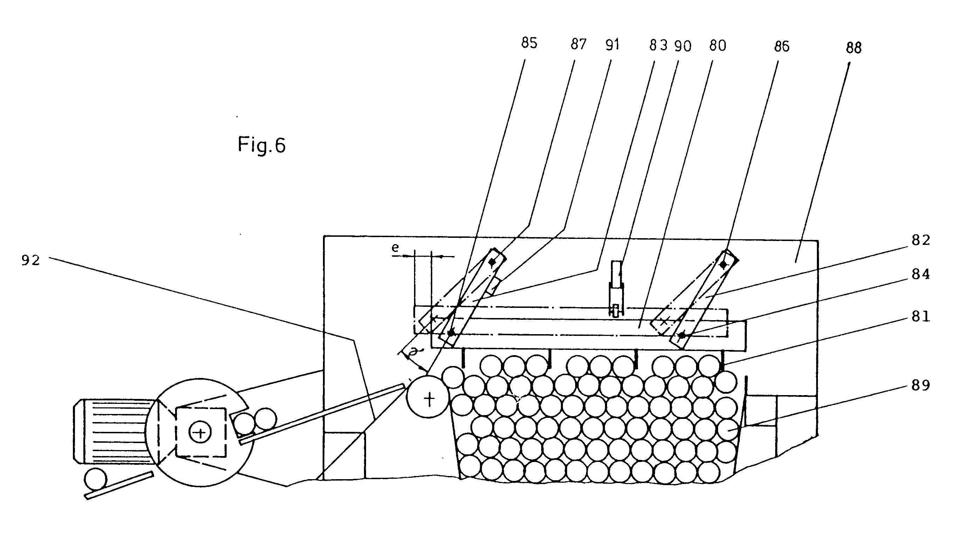

Fig. 6 zeigt Fördermittel 80 ohne eigenen Antrieb. An einer Mitnehmerhalterung sind die Mitnehmer 81 befestigt. Die Gelenkstangen 82,83 sind an der Mitnehmerhalterung in Punkten 84,85 und am Gestell 88 in den Punkten 86,87 gelenkig gelagert, wobei sie durch einen Anschlag 91 eine nach vorn in Förderrichtung gerichtete untere Stellung einnehmen. Beim Hochfahren der Werkstücke 89 drücken diese unter die Mitnehmerhalterung, so daß sie nach oben nachgibt, wobei die Gelenkstagen 82,83 eine Schwenkbewegung um den Winkel γ ausführen.

Die Mitnehmerhalterung mit ihren Mitnehmern 81 nimmt dann beispielsweise die strichpunktiert gezeichnete Lage ein, wobei sie nach vorn in Förderrichtung den Weg e zurückgelegt hat, d.h. die Werkstücke 89 wurden nach vorn gefördert. Der Schalter 90, der am Gestell 88 befestigt ist, wird von der Mitnehmerhalterung, wenn sie eine obere Stellung erreicht hat, geschaltet. Damit wird das Signal zum Wiederabsenken der Gurte 92 gegeben, die Mitnehmerhalterung senkt sich, bis die Gelenkstange 83 auf Anschlag 91 anliegt. Bei Bedarf werden die Gurte 92 wieder angehoben, was automatisch über eine externe Signalgebung an die Steuerung des Werkstückmagazins erfolgen kann, und der Fördervorgang wiederholt sich.

**Patentansprüche**

1.  Vorrichtung zum Austragen stangenförmiger Werkstücke (27,40,58,89) aus einem Werkstückmagazin, mit ersten Fördermitteln (24-26), welche die jeweils oben liegenden stangenförmigen Werkstücke aus dem Magazin in den Bereich von Mitnehmern (23,37,81) bringen, die an zweiten Fördermitteln (15,51,70,80) oberhalb der ersten Fördermittel angebracht sind, dadurch **gekennzeichnet,** daß die zweiten Fördermittel (15,51,70,80) gegenüber den jeweils oben liegenden, auszutragenden Werkstücken (27,40,58,89) derart nachgiebig gelagert sind, daß die Mitnehmer (23,37,81) gegenüber den zu fördernden Werkstücken (27,40,58,89) eine Ausgleichbewegung ausführen können und Verklemmungen vermieden werden.

2.  Vorrichtung nach Anspruch 1, dadurch gekennzeichnet, daß die zweiten Födermittel (15, 80) an Gelenkstangen (55, 56; 44, 45; 82, 83) aufgehängt sind, deren unterste Stellung durch einen Anschlag (64, 91) begrenzt ist.

3.  Vorrichtung nach Anspruch 1, dadurch gekennzeichnet, daß die zweiten Födermittel (70) in Langlöchern (73, 74) geführt und nach oben hin durch Federn (76, 77,) abgestützt sind.

4.  Vorrichtung nach Anspruch 1, dadurch gekennzeichnet, daß die zweiten Födermittel (51) um einen Punkt (52) seitlich der oben liegenden Werkstücklage schwenkbar gelagert sind.

5.  Vorrichtung nach einem der Ansprüche 1 bis 4, dadurch gekennzeichnet, daß die zweiten Födermittel (15, 51, 70) einen Ketten- oder Zahnriementrieb (16, 17, 21, 22) aufweisen, an dessen Kette bzw. Zahnriemen (22) die Mitnehmer (23) befestigt sind.

6.  Vorrichtung nach einem der Ansprüche 1 bis 4 dadurch gekennzeichnet, daß die zweiten Födermittel ein pneumatisch, elektrisch oder hydraulisch betriebenes Hubgerät (36) aufweisen, an dessen bewegtem Teil (43) der Mitnehmer (37) befestigt ist.

7.  Vorrichtung nach einem der Ansprüche 5 oder 6, mit einem Werkstückmagazin mit heb- und senkbaren Gurten (24, 42) bzw. einem Behälter mit heb- und senkbarem Boden, dadurch gekennzeichnet, daß die Zufuhrbewegung der Werkstücke (27, 40, 58) in den Förderbereich der Mitnehmer (23, 37) von einem opto-elektrischen Schalter (28, 28'; 39, 39') oder Schalter (50; 47) gesteuert ist der die oben liegende Werkstücklage bzw. die Ausweichbewegung der zweiten Födermittel (15) erfaßt.

8.  Vorrichtung nach Anspruch 1, mit einem Werkstückmagazin mit heb- und senkbaren Gurten (24, 42) bzw. einem Behälter mit heb- und senkbarem Boden gekennzeichnet durch eine Antriebsverbindung der heb- und senkbaren Werkstücke (89) mit den zweiten Födermitteln (80) derart, daß dieses durch die Anhebbewegung der Werkstücke zu einer Förderbewegung (e) veranlaßt wird.

9.  Vorrichtung nach Anspruch 8, dadurch gekennzeichnet, daß die zweiten Födermittel (80) an Gelenkstangen. (82, 83) aufgehängt sind, die durch einen Anschlag (91) in einer schräg nach vorn (in Förderrichtung) gerichteten unteren Stellung gehalten sind und bei Druck von unten das Fördersystem unter Erzielung einer Förderbewegung (e) verschwenken.

**Claims**

1.  A device for removing bar-shaped workpieces (27, 40, 58, 89) from a workpiece magazine, with first conveyor means (24-26), which bring the currently upper workpieces from the magazine into the region of entraining elements (23, 37, 81), which are fitted on second conveyor means (15, 51, 70, 80) above the first conveyor means, characterized in that the second conveyor means (15, 51, 70, 80) are mounted to yield relative to the upper workpieces (27, 40, 58, 89) to be removed in such a manner that the entraining elements (23, 37, 81) can undergo a compensating movement relative to the workpieces (27, 40, 58, 89) to be conveyed and jamming is avoided.

2. A device according to claim 1, characterized in that the second conveyor means (15, 80) are suspended on hinged rods (55, 56; 44, 45; 82, 83), whose lowermost position is limited by a stop (64, 91).

3. A device according to claim 1, characterized in that the second conveyor means (70) are guided in slots (73, 74) and are backed up above by springs (76, 77).

4. A device according to claim 1, characterized in that the second conveyor means (51) are pivotally mounted about a point (52) to the side of the upper workpiece position.

5. A device according to any one of claims 1 to 4, characterized in that the second conveyor means (15, 51, 70) comprise a chain or toothed belt drive (16, 17, 21, 22), on whose chain or toothed belt (22) are fixed the entraining elements (23).

6. A device according to any one of claims 1 to 4, characterized in that the second conveyor means compose a pneumatic, electric or hydraulic reciprocating device (36), on whose moving part (43) is fixed the entraining element (37).

7. A device according to claim 5 or 6, with a workpiece magazine having rising and falling straps (24, 42) or a container with a rising and falling bottom, characterized in that the feed movement of the workpieces (27, 40, 58) into the conveying region of the entraining elements (23, 37) is controlled by an opto-electric switch (28, 28'; 39, 39') or switch (50; 47) which detects the upper workpiece position or the deflecting movement of the second conveyor means (15).

8. A device according to claim 1, with a workpiece magazine having rising and falling straps (24, 42) or a container with a rising and falling bottom, characterized by a drive coupling between the rising and falling workpieces (89) and the second conveyor means (80) such that these are caused to effect a feed movement (e) by the rising movement of the workpieces.

9. A device according to claim 8, characterized in that the second conveyor means (80) are suspended oil hinged rods (82, 83), which are held by a stop (91) in a lower position aligned obliquely forwards (in the conveying direction) and are swung by pressure from below the conveyor means to obtain a feed movement (e).

**Revendications**

1. Dispositif pour extraire des pièces façonnées (27,40,58,89) en forme de barres d'un magasin à pièces, comportant des premiers moyens de transport (24 à 26), qui sortent du magasin les pièces façonnées en forme de barre situées au-dessus et les placent dans la zone d'organes d'entraînement (23,37,81), montés sur des deuxièmes moyens de transport (15,51,70,80), installés au-dessus des premiers moyens de transport, caractérisé en ce que les deuxièmes moyens de transport (15,51,70,80) sont montés de façon déformables par rapport aux pièces façonnées (27,40,58,89) à extraire, situées chaque fois au-dessus, de telle manière que les organes d'entraînement (23,37,81) puissent effectuer un mouvement de compensation par rapport aux pièces façonnées (27,40,58,89) à transporter et que tout coincement puisse être évité.

2. Dispositif selon la revendication 1, caractérise en ce que les deuxièmes moyens de transport (15,80) sont suspendus à des tiges d'articulation (55,56;44,45;82,83), dont la position la plus basse est limitée par une butée (64,91).

3. Dispositif selon la revendication 1, caractérisé en ce que les deuxièmes moyens de transport (70) sont guidé dans des trous oblongs (73,74) et soutenus vers le haut, au moyen de ressorts (76,77).

4. Dispositif selon la revendication 1, caractérisé en ce que les deuxièmes moyens de transport (51) sont montés pivotants autour d'un point (52), sur le côté de la position de la pièce façonnée située au-dessus.

5. Dispositif selon l'une des revendications 1 à 4, caractérisé en ce que les deuxièmes moyens de transport (15,51,70) présentent un entraînement à chaîne ou à courroie crantée (16,17,21,22), sur la chaîne, respectivement la courroie crantée (22) duquel sont fixés les organes d'entraînement (23).

6. Dispositif selon l'une des revendications 1 à 4, caractérisé en ce que les deuxièmes moyens de transport présentent un appareil de levage (36) à fonctionnement pneumatique, électrique ou hydraulique, sur la partie mobile (43) duquel est fixé l'organe d'entraînement (37).

7. Dispositif selon l'une des revendications 5 ou 6, avec un magasin de pièces façonnées comportant des courroies (24,42) levables et abaissables, respectivement un récipient avec un fond levable et abaissable, caractérisé en ce que le mouvement d'amenée des pièces façonnées (27,40,58) dans la zone de transport des organes d'entraînement (23,37) est commandé par un interrupteur électro-optique (28,28';39,39') ou un interrupteur (50;47), qui mesure la position de la pièce du haut, respectivement le mouvement d'écartement des deuxièmes moyens de transport (15).

8. Dispositif selon la revendication 1, avec un magasin de pièces façonnées comportant des courroies (24,42) levables et abaissables, respectivement un récipient avec un fond levable et abaissable, caractérisé par une liaison d'entraînement les pièces façonnées levables et abaissables (89), avec les deuxièmes moyens de transport (80), de telle façon que ceci soit provoqué par un mouvement de levée des pièces façonnées, se transformant en un déplacement de transport (e).

9. Dispositif selon la revendication 8, caractérisé en ce que les deuxièmes moyens de transport (80) sont suspendus aux tiges d'articulation (82,83), maintenues, au moyen d'une butée (91), en une position basse orientée en biais vers l'avant (dans le sens du transport) et pivotant le système de transport, dans le cas d'une pression depuis le bas, en produisant un déplacement de transport (e).

Fig.1

Fig. 2

EP 0 348 763 B1

Fig.3

Fig.4

EP 0 348 763 B1

10

Fig.5

Fig.6